# FASCICULE DE BREVET EUROPEEN

(11) **EP 1 717 102 B1**
(45) Date de publication et mention de la délivrance du brevet: **21.05.2008**
(21) Numéro de dépôt: 06007174.3
(22) Date de dépôt: 05.04.2006
(51) Int. Cl.: B60Q 3/04, F21V 8/00

(54) **Guide de lumière d'un bouton de commande équipé d'un index rotatif**
Lichtwellenleiter für einen Steuerknopf mit einem Indexrat
Lightguide for a control knob with a rotating dial

(30) Priorité: 25.04.2005 FR 0504117
(43) Date de publication de la demande: 02.11.2006
(73) Titulaire: VALEO SYSTEMES THERMIQUES, 78321 Le Mesnil St Denis Cedex (FR)
(72) Inventeur: Chery, André, 77330 Ozoir la Ferrière (FR); Guichardon, Stéphane, 78380 Bougival (FR); Wroblewski, Jérôme, 95560 Maffliers (FR); Lucaora, Laurent, 92170 Vanves (FR); Callahan, Kevin, JOT 1SO LA MINERVE (CA)
(74) Mandataire: Croonenbroek, Thomas Jakob

(56) Documents cités:
- US-A- 4 734 918
- US-A- 4 800 466
- US-A- 4 916 591
- US-B1- 6 224 221

## Description

### Domaine technique de l'invention.

L'invention est du domaine des dispositifs d'éclairage, notamment pour un tableau de bord d'un véhicule. Plus particulièrement, l'invention est du domaine des dispositifs d'éclairage équipant un bouton de commande d'un tel tableau de bord. Elle a pour objet un guide de lumière interposé entre une source lumineuse et un index rotatif équipant le bouton de commande. Elle a aussi pour objet un dispositif de montage d'un tel guide de lumière sur un bouton de commande, et un bouton de commande équipé d'un tel guide de lumière.

### Etat de la technique.

Un tableau de bord d'un véhicule est équipé d'une pluralité de boutons de commande d'organes fonctionnels du véhicule, tels que ceux d'une installation de ventilation, de chauffage et/ou de climatisation par exemple. Pour identifier les boutons les uns parmi les autres, il est connu de les munir de symboles distinctifs, par exemple ménagés à leur surface. De tels boutons sont susceptibles d'être des boutons rotatifs mobiles en rotation autour de leur axe de symétrie, des boutons-poussoirs mobiles en translation le long de ce même axe, voire des boutons cumulant ces deux mobilités.

Parmi ces boutons, on connaît ceux qui sont pourvus d'un index mobile en rotation autour de l'axe de symétrie du bouton pour circuler en regard de repères que comporte le tableau de bord. Dans le cas d'un bouton rotatif, l'index est intégré au bouton tandis que dans le cas d'un bouton-poussoir, l'index est mobile en rotation autour d'un corps de bouton qui est mobile en translation. Pour commander la mise en oeuvre d'un organe fonctionnel du véhicule, l'utilisateur du véhicule manoeuvre en rotation l'index pour le positionner en vis-à-vis du repère du tableau de bord qui correspond à son choix de mise en oeuvre. Suivant les cas respectifs susvisés, cette manoeuvre est réalisée à partir de la manoeuvre en rotation soit du bouton rotatif, soit de l'index.

Il est connu d'équiper de tels boutons de commande d'un dispositif d'éclairage d'une zone à éclairer, tel que le symbole ou l'index rotatif. Ce dispositif comporte une source lumineuse et un guide de lumière optiquement transparent interposé entre la source et la zone à éclairer. Parmi ces dispositifs, on connaît plus particulièrement ceux pour lesquels la source lumineuse est montée à l'arrière du tableau de bord et au voisinage de l'axe de rotation de l'index. Le guide de lumière comporte une face de réception des rayons lumineux émis par ladite source, des faces intermédiaires de renvoi des rayons lumineux reçus et une face de sortie des rayons lumineux renvoyés. L'index rotatif est également réalisé à partir d'un matériau optiquement transparent et est situé à proximité de la face de sortie du guide de lumière pour diffuser les rayons qu'il reçoit.

Un défaut de tels guides de lumière réside dans le fait qu'ils procurent un rendement lumineux insatisfaisant de la lumière diffusée par l'index par rapport à la lumière émise par la source lumineuse. En outre, la lumière diffusée par l'index rotatif n'est pas homogène et dépend notamment de la position de ce dernier vis-à-vis de la source lumineuse.

Par ailleurs, se pose le problème du montage de l'index et du guide de lumière sur le bouton de commande. Ceux-ci sont couramment ménagés par surmoulage sur un corps rotatif évidé du bouton, qui est monté tournant sur un support du tableau de commande. Un anneau décoratif est placé au débouché du corps de manière à laisser émerger l'index.

De telles dispositions ne sont pas satisfaisantes au regard de l'homogénéité de l'éclairage obtenu de l'index. En outre, la formation de l'index et du guide de lumière par surmoulage sur le corps rotatif implique une opération de bi injection coûteuse. De surcroît, dans le cas d'une modification de forme du guide de lumière et/ou de l'index, il est nécessaire de modifier en conséquence la forme du corps rotatif, avec en corollaire la nécessité de modifier le moule d'obtention de celui-ci. Il en ressort un inconvénient majeur de ne pouvoir exploiter un même corps rotatif pour des guides de lumière et des index de formes différentes.

### Objet de l'invention.

Le but de la présente invention est de proposer un guide de lumière agencé pour limiter les pertes lumineuses au cours du trajet optique des rayons lumineux émis par la source lumineuse jusqu'à une zone à éclairer, telle qu'un index rotatif. Plus particulièrement, il est proposé un guide de lumière dont l'agencement des faces permet de satisfaire à la loi optique de la réflexion totale. Il est aussi visé de proposer un guide de lumière dont la face de réception soit agencée de sorte que la surface apparente de cette dernière vue de la source lumineuse soit la plus importante possible. Il est enfin visé par la présente invention de proposer un tel guide de lumière permettant une diffusion homogène de la lumière par l'index rotatif quelle que ce soit la position de ce dernier entre ses positions extrêmes de manoeuvre en rotation. Un autre but de la présente invention est de proposer un bouton de commande équipé d'un tel guide de lumière. Un autre but de la présente invention est de proposer un dispositif de montage d'un index lumineux et d'un guide de lumière sur un bouton de commande, permettant d'optimiser l'exploitation de l'éclairement de l'index lumineux et de l'homogénéité de cet éclairement. En outre, il est visé par la présente invention de proposer un bouton de commande équipé d'un index lumineux et d'un guide de lumière, dont les modalités d'apport de ces derniers permettent de réduire les coûts d'obtention du bouton de commande, et permettent l'exploitation d'un même corps rotatif que ce bouton de commande comporte pour le montage d'un index lumineux et d'un guide de lumière de forme relativement quelconque.

Le guide lumière de la présente invention est un guide de lumière pour bouton de commande, notamment d'un tableau de bord d'un véhicule. Le bouton est équipé d'un index mobile en rotation autour d'un axe. Le guide de lumière est destiné à être interposé entre une source lumineuse et l'index et comporte au moins une face de réception des rayons lumineux émis par la source lumineuse, une première face de sortie de rayons lumineux vers l'index et des faces latérales interposées entre la face de réception et la première face de sortie.

Selon la présente invention, un tel guide de lumière est principalement reconnaissable en ce qu'il comporte des premiers moyens optiques pour orienter les rayons lumineux reçus sensiblement parallèlement à l'axe de rotation de l'index et des deuxièmes moyens optiques pour focaliser vers au moins la première face de sortie les rayons lumineux préalablement orientés sensiblement parallèlement à l'axe de rotation de l'index.

Les premiers moyens optiques comprennent avantageusement la face de réception du guide de lumière.

Selon un premier mode de réalisation, la face de réception est agencée en une surface plane.

Selon un deuxième mode de réalisation, la face de réception est agencée en une lentille sphérique dont le point focal est la source lumineuse et dont l'axe optique est l'axe de rotation de l'index.

Selon un troisième mode de réalisation, la face de réception est agencée en une lentille de surface asphérique.

Selon un troisième mode de réalisation, la face de réception est agencée en une lentille de surface polynomiale.

Selon une variante de réalisation des premiers moyens optiques, ceux-ci comprennent en outre et avantageusement une face-miroir ménagée dans le guide de lumière en regard de la face de réception.

La face de réception est par exemple agencée selon une portion d'un cylindre d'axe parallèle à l'axe de rotation de l'index tandis que la face-miroir est agencée selon une parabole dont le foyer est la source lumineuse.

Selon un autre exemple de réalisation, la face de réception est agencée selon une portion d'une lentille sphérique dont le point focal est la source lumineuse tandis que la face-miroir est agencée selon la surface d'un cône d'axe parallèle à l'axe de rotation de l'index.

Selon encore un autre exemple de réalisation, la face de réception est agencée selon une portion d'une lentille torique dont le point focal est la source lumineuse tandis que la face-miroir est agencée selon la surface d'un cône d'axe parallèle à l'axe de rotation de l'index.

Selon encore un autre exemple de réalisation, la face de réception est agencée selon une portion d'une lentille sphérique tandis que la génératrice de la face-miroir est une parabole dont le point focal est l'image de la source lumineuse, cette image étant obtenue par l'intermédiaire de la face de réception.

Selon un dernier exemple de réalisation, la face de réception est agencée selon une portion d'une lentille torique tandis que la génératrice de la face-miroir est une parabole dont le point focal est l'image de la source lumineuse, cette image étant obtenue par l'intermédiaire de la face de réception.

Les deuxièmes moyens optiques comprennent avantageusement au moins les faces latérales du guide de lumière.

La génératrice respective de chacune des faces latérales est par exemple une parabole dont le foyer est situé à l'aplomb de la première face de sortie.

De préférence, les deuxièmes moyens optiques comprennent en outre des faces supplémentaires planes qui sont interposées entre les faces latérales et la première face de sortie.

Les deuxièmes moyens optiques comprennent en outre et avantageusement une deuxième face de sortie ménagée dans le guide de lumière en regard de la face de réception pour focaliser les rayons lumineux reçus par la face complémentaire de sortie vers un symbole équipant le bouton.

Le guide de lumière est préférentiellement constitué de deux guides élémentaires de lumière dont un premier guide élémentaire de lumière comportant les premiers moyens optiques et un deuxième guide élémentaire de lumière comportant au moins partiellement les deuxièmes moyens optiques.

Les deuxièmes moyens optiques comprennent en outre avantageusement :
- une première face intermédiaire ménagée dans le premier guide élémentaire en regard de la face de réception,
- une face latérale ménagée dans le premier guide élémentaire de lumière en regard de la première face intermédiaire,
- une face d'entrée ménagée dans le deuxième guide élémentaire de lumière en regard de la face latérale et,
- une deuxième face intermédiaire ménagée dans le deuxième guide élémentaire de lumière en regard de la face d'entrée.

La première face intermédiaire est par exemple agencée en une pluralité de surfaces planes.

Selon un autre exemple de réalisation de la première face intermédiaire, la génératrice de cette dernière est une parabole dont le foyer est un point du deuxième guide élémentaire de lumière.

Selon encore un autre exemple, la première face intermédiaire est agencée selon la surface d'un cône d'axe parallèle à l'axe de rotation de l'index.

La face d'entrée est par exemple agencée selon une portion d'un cylindre d'axe parallèle à l'axe de rotation de l'index tandis que la génératrice de la deuxième face intermédiaire est une parabole dont le foyer est située en un point de la face latérale.

Selon un autre exemple de réalisation de la face d'entrée, cette dernière est agencée selon une portion d'une lentille sphérique dont le point focal est située sur la face latérale tandis que la deuxième face intermédiaire est agencée selon la surface d'un cône d'axe parallèle à l'axe de rotation de l'index.

Selon un autre exemple de réalisation de la face d'entrée, cette dernière est agencée selon une portion d'une lentille torique dont le point focal est située sur la face latérale tandis que la deuxième face intermédiaire est agencée selon la surface d'un cône d'axe parallèle à l'axe de rotation de l'index.

Selon un autre exemple de réalisation de la face d'entrée, cette dernière est agencée selon une portion d'une lentille sphérique dont le point focal est située sur la face latérale tandis que la génératrice de la deuxième face intermédiaire est une parabole dont le point focal est l'image d'un point de la face latérale obtenue par l'intermédiaire de la face d'entrée.

Selon un dernier exemple de réalisation de la face d'entrée, cette dernière est agencée selon une portion d'une lentille torique dont le point focal est située sur la face latérale tandis que la génératrice de la deuxième face intermédiaire est une parabole dont le point focal est l'image d'un point de la face latérale obtenue par l'intermédiaire de la face d'entrée.

Selon une première variante, le guide de lumière et l'index rotatif constituent un ensemble monobloc.

Selon une autre variante, le deuxième guide élémentaire de lumière et l'index rotatif constituent un ensemble monobloc.

L'une au moins des faces latérales est préférentiellement recouverte d'un revêtement réfléchissant.

La face de sortie est par exemple dépolie pour diffuser les rayons lumineux qu'elle reçoit.

Selon un autre exemple de réalisation de la face de sortie, cette dernière est recouverte d'une matière diffusante surmoulée pour diffuser les rayons lumineux qu'elle reçoit.

Un bouton de commande de la présente invention est équipé d'au moins un guide de lumière tel que défini plus haut.

Selon un exemple particulier de réalisation, le bouton de commande comprend un corps de bouton mobile en translation le long de son axe de symétrie et un index mobile en rotation autour de cet axe de symétrie.

Selon un autre exemple de réalisation du bouton de commande, ce dernier étant par exemple un bouton rotatif intégre l'index.

Le cas échéant, le bouton de commande est pourvu d'un symbole situé en regard d'au moins une face de sortie du guide de lumière.

Le bouton de commande comporte avantageusement un corps rotatif axialement évidé équipé de moyens de réception par emboîtement du guide de lumière. Ces moyens de réception par emboîtement sont notamment des moyens de positionnement et d'immobilisation sur le corps du guide de lumière radialement et en rotation. Ces moyens de réception sont avantageusement associés à des moyens de blocage axial du guide de lumière sur le corps.

Ces moyens de réception comprennent plus particulièrement une échancrure ménagée dans la face interne du corps rotatif pour la réception du guide de lumière, et des moyens de soutien axial de ce dernier.

De préférence, ladite échancrure comporte une première zone conformée en rampe axialement inclinée contre laquelle prend appui une face arrière du guide de lumière. De préférence encore, ladite échancrure comporte une deuxième zone débouchante axialement inclinée de réception de l'index lumineux. Les faces axiales des première et deuxième zones sont préférentiellement orientées en dièdre l'une par rapport à l'autre.

Selon un exemple préféré de réalisation, lesdits moyens de soutien axial associent une platine ménagée sur le guide de lumière et des pattes de soutien de cette platine ménagées sur le corps. La face de la platine en regard sur la paroi du corps est notamment de forme convexe complémentaire à la forme concave de ladite paroi du corps.

De préférence, lesdits moyens de réception comprennent des moyens de blocage du guide de lumière en appui axial contre les organes de soutien. Ces moyens de blocage sont avantageusement constitués par un anneau décoratif coiffant le bord du débouché du corps rotatif. Plus particulièrement, l'anneau décoratif comporte une échancrure pour le passage de l'extrémité correspondante du guide lumière, qui constitue l'index lumineux. En outre, la face de bout correspondante de l'anneau décoratif prend avantageusement appui contre la platine à l'encontre de l'appui antagoniste que prend cette dernière contre les organes de soutien.

L'anneau décoratif est notamment rapporté par clipage sur le corps rotatif. Par exemple, l'anneau décoratif est muni de pattes d'emboîtement à l'intérieur du corps, ce dernier comportant des glissières de guidage de ces pattes d'emboîtement pour le positionnement radial de l'anneau décoratif sur le corps rotatif. Les pattes d'emboîtement sont avantageusement organisées en détrompeur, et sont préférentiellement munies à leur extrémité libre d'un crochet coopérant avec un logement respectif ménagé sur le corps.

### Description des figures.

La présente invention sera mieux comprise et des détails complémentaires relevant apparaîtront à la lecture de la description qui va en être faite en relation avec les figures annexées, dans lesquelles :
Les fig.1, fig.2 et fig.3 sont des vues schématiques d'un guide de lumière réalisé selon des variantes de la présente invention.
Les fig.4, fig.5 et fig.6 sont des vues de détail d'agencements respectifs d'une face de réception et d'une face-miroir d'un guide de lumière du type de celui représenté sur la fig.2.
La fig.7 est une vue en perspective d'un guide de lumière du type de celui représenté sur la fig.1.
La fig.8 est une vue en perspective éclatée d'un bouton de commande équipé d'un guide de lumière du type de celui représenté sur la fig.3.
La fig.9 est une vue en coupe d'un bouton de commande équipé d'un premier guide de lumière du type de celui représenté sur la fig.1 et d'un deuxième guide de lumière du type de celui représenté sur la fig.3.
Les fig.10 et fig.11 sont des illustrations en perspective d'un corps rotatif et d'un guide de lumière que comporte un bouton de commande selon l'invention, respectivement en vue éclatée et en vue assemblée.
La fig.12 est une illustration en perspective éclatée du corps rotatif sur lequel est monté le guide de lumière tel que représenté sur les fig.10 et fig.11, équipé d'un anneau décoratif de maintien axial du guide de lumière.

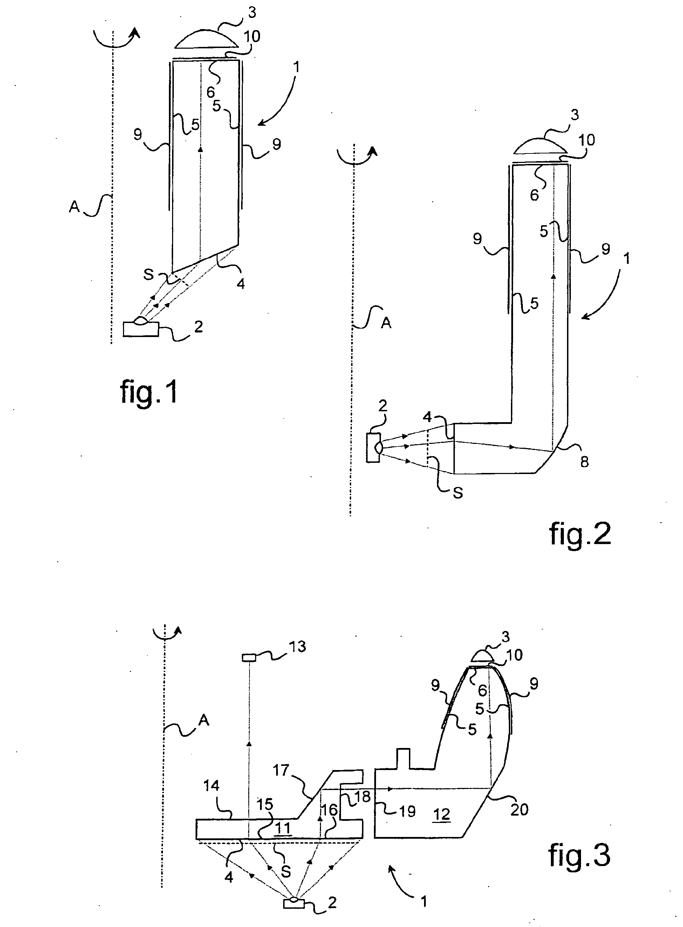

Sur les fig.1 à fig.3 sont représentées des variantes respectives de réalisation d'un guide de lumière (1) destiné à équiper un bouton de commande, notamment d'un tableau de bord d'un véhicule. Le guide de lumière (1) est disposé entre une source lumineuse (2) et un index (3) qui équipent le bouton de commande. L'index (3) est mobile en rotation autour d'un axe, tel que l'axe (A) du bouton tandis que la source lumineuse (2) est fixée sur le bouton au voisinage de son axe (A). Le guide de lumière (1), réalisé notamment par moulage d'une matière optiquement transparente, par exemple en polycarbonate, comporte une face de réception (4) des rayons lumineux émis par la source lumineuse (2), des faces latérales (5) qui renvoient les rayons reçus vers une première face de sortie (6). La face de réception (4) est située à proximité de la source lumineuse (2) tandis que la première face de sortie (6) est située à proximité de l'index (3). La face de réception (4) est agencée de sorte que sa surface apparente (S) vue de la source lumineuse (2) soit la plus importante possible.

De façon préférentielle et selon les exemples de réalisations décrits, l'axe (A) est l'axe de rotation de l'index (3).

Sur les fig.1 et fig.3, la face de réception (4) est également agencée de sorte que les rayons lumineux qu'elle reçoit soient orientés sensiblement parallèlement à l'axe (A). La face de réception (4) représentée sur ces figures est agencée en une surface plane et les rayons réfractés par cette dernière sont parallèles à l'axe (A) de l'index (3). Toutefois, selon l'agencement de l'index (3), les rayons lumineux sont sensiblement dirigés selon la direction principale de l'index (3). On entend par direction principale, l'axe de plus grande dimension selon laquelle s'etend l'index (3).

Selon des modes de réalisation de la face de réception non représentés sur les figures, cette dernière est susceptible d'être agencée en une lentille sphérique dont le point focal est la source lumineuse et dont l'axe optique est l'axe de l'index, ou encore en une lentille de surface asphérique, voire de surface polynomiale afin d'optimiser encore le chemin optique des rayons réfractés à l'intérieur du guide de lumière.

Pour améliorer encore la taille de la surface apparente de la face de réception (4) vue de la source lumineuse (2), la face de réception (4) du guide de lumière (1) représenté sur la fig.2 est ménagée latéralement dans ce dernier (1). Pour orienter parallèlement à l'axe (A) de l'index (3) les rayons que la face de réception (4) reçoit, cette dernière (4) est associée à une face dite « miroir » (8), ou face-miroir (8), ménagée dans le guide de lumière (1) en regard de la face de réception (4). La face-miroir (8) est agencée de telle manière que les rayons émis à travers la face de réception (4) soit intégralement réfléchis par la face-miroir (8) selon la loi de la réflexion totale.

Ainsi, la face de réception (4) est susceptible d'être agencée selon une portion d'un cylindre d'axe parallèle à l'axe (A) de l'index (3), la génératrice de la face-miroir (8) étant une parabole dont le foyer est la source lumineuse (2), tel que représenté sur la fig.2.

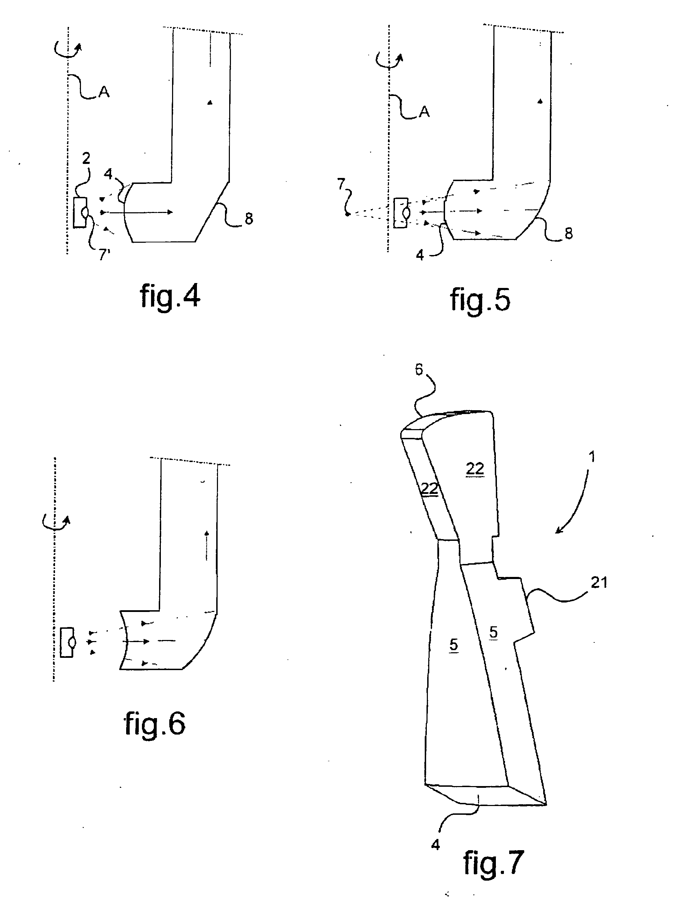

Il est aussi possible d'agencer la face de réception (4) selon une portion d'une lentille sphérique dont le point focal est la source lumineuse (2), la face-miroir (8) étant agencée selon la surface d'un cône d'axe parallèle à l'axe (A) de l'index (3), tel que représenté sur la fig.4.

Il est encore possible d'agencer la face de réception (4) selon une portion d'une lentille sphérique dont le point focal est la source lumineuse (2), la génératrice de la face-miroir (8) étant une parabole, cette image (7) étant obtenue par l'intermédiaire de la face de réception (4), tel que représenté sur la fig.5.

Selon un exemple de réalisation non représenté, la face de réception est agencée selon une portion d'une lentille sphérique dont le point focal est la source lumineuse, la face-miroir étant la surface d'un cône d'axe parallèle à l'axe de l'index.

Selon un autre exemple de réalisation non représenté, la face de réception est agencée selon une portion d'une lentille torique dont le point focal est la source lumineuse, la face-miroir étant agencée selon la surface d'un cône d'axe parallèle à l'axe de rotation de l'index.

La face de réception (4) étant encore agencée selon une portion d'une lentille torique dont le point focal est la source lumineuse (2), la génératrice de la face-miroir (8) étant une parabole, cette image (7') étant obtenue par l'intermédiaire de la face de réception (4), tel que représenté sur la fig.6.

Sur les fig.1 à fig.3, les faces latérales (5) du guide de lumière (1) sont agencées pour focaliser vers la première face de sortie (6) les rayons lumineux préalablement orientés parallèlement à l'axe (A) de l'index (3). Les génératrices des faces latérales (5) sont des paraboles dont le foyer est situé à l'aplomb de la première face de sortie (6). Les rayons lumineux qui pénètrent la face de réception (4) sont rendus parallèles à l'axe (A) de l'index (3) par la face de réception (4), puis sont focalisés après réflexion sur les faces latérales (5) vers la première face de sortie (6). De façon préférentielle, les paraboles sont définies de telle sorte à respecter la loi de la réflexion totale. Les faces latérales (5) sont préférentiellement recouvertes d'un revêtement réfléchissant (9) déposé par exemple par dépôt sous vide ou par anodisation pour limiter la réfraction sur ces faces (5).

Sur la fig.3, le guide de lumière (1) est constitué d'un premier guide élémentaire de lumière (11) et d'un deuxième guide élémentaire (12). La lumière émise par la source lumineuse (2) est destinée à éclairer soit un symbole (13) du bouton de commande situé en regard d'une deuxième face de sortie (14) ménagée dans le premier guide élémentaire de lumière (11), soit l'index rotatif (3) situé en regard de la première face de sortie (6) ménagée dans le deuxième guide élémentaire de lumière (12).

Le premier guide élémentaire de lumière (11) comporte la face de réception (4) et la deuxième face de sortie (14). La face de réception (4) participe simultanément à l'éclairage du symbole (13) du bouton de commande et de l'index rotatif (3). Pour ce faire, la face de réception (4) comprend une première face élémentaire de réception (15) et une deuxième face élémentaire de réception (16), dont les agencements respectifs sont susceptibles d'être différents l'un de l'autre et choisis parmi un agencement selon une surface plane, un agencement en une lentille sphérique dont le point focal est la source lumineuse (2) et dont l'axe optique est l'axe (A) de l'index (3), ou encore un agencement en une lentille de surface asphérique, voire de surface polynomiale.

La première face élémentaire de réception (15) et la deuxième face de sortie (14) sont agencées en regard l'une de l'autre dans la partie centrale du premier guide élémentaire (11) pour former une lentille d'épaisseur relativement constante. Idéalement, l'épaisseur de la lentille est faible pour éviter des problèmes de retassure du premier guide élémentaire de lumière (11) lors de sa fabrication par moulage. Ces dispositions sont telles que l'éclairage du symbole (13) est optimisé pour une quantité de lumière donnée fournie par la source lumineuse (2).

Le premier guide élémentaire de lumière (11) comporte également une première face intermédiaire (17) ménagée en regard de la deuxième face élémentaire de réception (16) et une face latérale (18) ménagée en regard de la première face intermédiaire (17). Selon diverses formes de réalisation, la première face intermédiaire (17) est susceptible d'être agencée en une pluralité de surfaces planes ou selon la surface d'un cône d'axe parallèle à l'axe (A) de l'index (3). Il est aussi possible que la génératrice de la première face intermédiaire (17) soit une parabole dont le foyer est un point du deuxième guide élémentaire (12). La face latérale (18) est susceptible d'être agencée pour focaliser vers le deuxième guide élémentaire (12) les rayons lumineux en provenance de la première face intermédiaire (17).

Le deuxième guide élémentaire (12) comporte une face d'entrée (19) ménagée en regard de la face latérale (18) du premier guide élémentaire de lumière (12), une deuxième face intermédiaire (20) ménagée en regard de la face d'entrée (19), les faces latérales (5) et la première face de sortie (6). L'agencement et la nature de la face d'entrée (19) et de la deuxième face intermédiaire (20) sont semblables à ceux de la face de réception (4) et de la face-miroir (8) du guide de lumière (1) du type de celui représenté sur la fig.2. Plus particulièrement et à titre d'exemple, la face d'entrée (19) est agencée selon une portion d'un cylindre d'axe parallèle à l'axe (A) de l'index (3) et la génératrice de la deuxième face intermédiaire (20) est une parabole dont le foyer est située en un point de la face latérale (18). De même, la face d'entrée (19) est agencée selon une portion d'une lentille sphérique dont le point focal est située sur la face latérale (18) et la deuxième face intermédiaire (20) est agencée selon la surface d'un cône d'axe parallèle à l'axe (A) de l'index (3). Il est aussi possible que la face d'entrée (19) soit agencée selon une portion d'une lentille torique dont le point focal est située sur la face latérale (18) et que la deuxième face intermédiaire (20) soit agencée selon la surface d'un cône d'axe parallèle à l'axe de rotation de l'index (3). On peut aussi agencer la face d'entrée (18) selon une portion d'une lentille sphérique; la génératrice de la deuxième face intermédiaire (20) étant une parabole dont le point focal est l'image d'un point de la face latérale (18) obtenue par l'intermédiaire de la face d'entrée (19). Enfin, la face d'entrée (18) est susceptible d'être agencée selon une portion d'une lentille torique tandis que la génératrice de la deuxième face intermédiaire (20) est une parabole dont le point focal est l'image d'un point de la face latérale (18) obtenue par l'intermédiaire de la face d'entrée (19).

Selon diverses variantes de réalisation des première et deuxième faces de sortie (6,14), ces dernières (6,14) sont susceptibles d'être soit dépolies, soit recouvertes d'une matière diffusante (10) surmoulée pour diffuser les rayons lumineux qu'elles reçoivent.

Sur la fig.7, le guide de lumière (1) comporte un doigt (21) pour sa fixation par emboîtement ou analogue dans un bouton de commande. Ce doigt (21) est ménagé dans une face latérale (5) du guide de lumière (1). Par ailleurs, le guide de lumière (1) comporte des faces supplémentaires (22) interposées entre les faces latérales (5) et la première face de sortie (6). Ces faces supplémentaires (22) sont agencées selon des surfaces planes respectives pour permettre une réflexion totale des rayons lumineux successivement réfléchis par les faces latérales (5) et les faces supplémentaires (22).

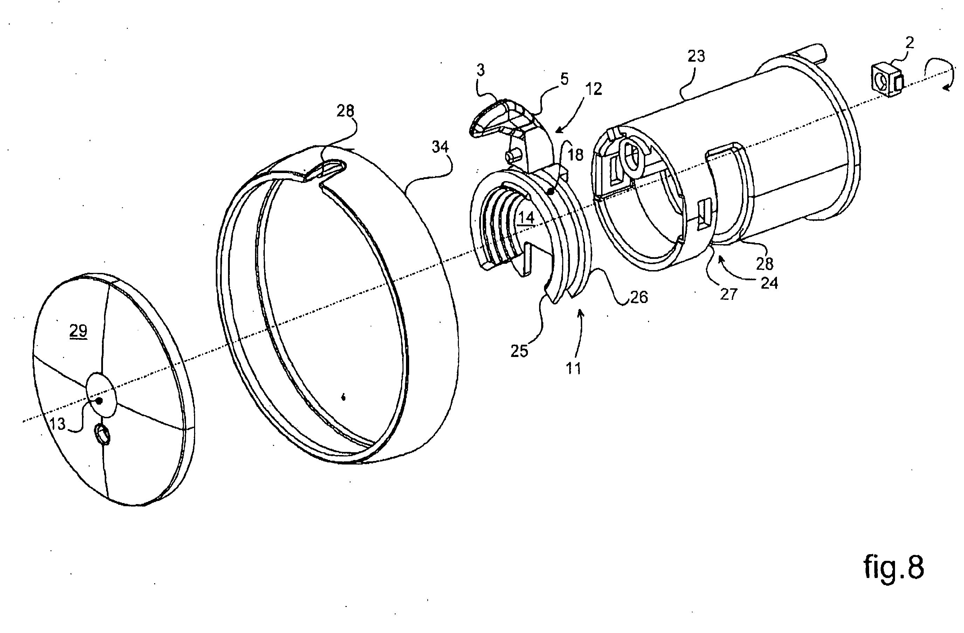

Sur la fig.8, un bouton de commande du type bouton-poussoir est équipé d'un guide de lumière (1) constitué d'un premier guide élémentaire de lumière (11) et d'un deuxième guide élémentaire de lumière (12) du type de ceux représentés sur la fig.3. Le bouton de commande comprend un corps de bouton (23) mobile en translation le long de l'axe (A) du bouton. Le corps de bouton est globalement agencé en un cylindre, comportant dans sa paroi de révolution une découpe (24) formant une fenêtre destinée à recevoir le premier guide élémentaire de lumière (11). Il en ressort que ce dernier (11) est susceptible de se déplacer en translation le long de l'axe (A) du bouton de commande.

Le premier guide élémentaire de lumière (11) est globalement conformé en une couronne dont les faces axiales (25,26) viennent s'emboîter contre les bords (27,28) de la fenêtre (24). Le premier guide élémentaire de lumière (11) comporte la première face de sortie (14) qui est ménagée radialement en bordure de la couronne, en étant disposée sensiblement parallèlement à la face de réception.

Le bouton de commande comprend également un anneau (34) qui est mobile en rotation autour de l'axe (A) du bouton. Cet anneau (34) comporte une saignée longitudinale (28) qui reçoit le deuxième guide élémentaire de lumière (12) par emboîtement ou analogue. Il en ressort que le deuxième guide élémentaire de lumière (12) circule en rotation autour du premier guide élémentaire (11) mobile en translation. L'anneau (34) est équipé d'un couvercle (29) muni de symboles (13) éclairés par les rayons lumineux en provenance de la deuxième face de sortie (14).

Sur la variante de réalisation illustrée, le deuxième guide élémentaire de lumière (12) constitue avec l'index (3) un ensemble monobloc porté par l'anneau (34).

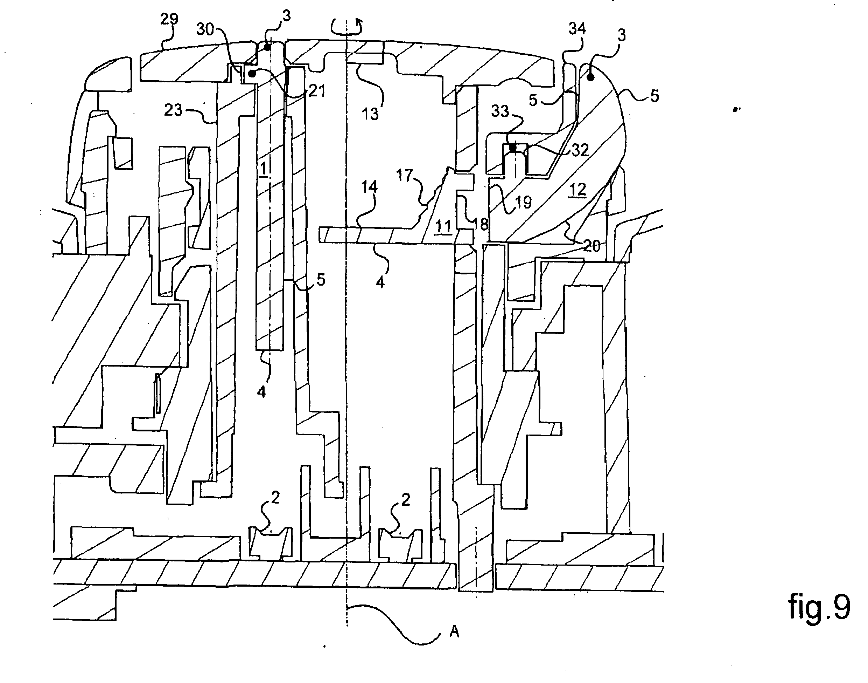

Sur la fig.9, sont illustrées les intégrations respectives dans un bouton de commande du type bouton-poussoir de deux guides de lumière (1 ; 11,12) dont un premier (1) du type de celui représenté sur la fig.1 et un deuxième (11,12) du type de celui représenté sur la fig.3. Le bouton de commande est équipé de deux sources lumineuses (2) disposées au voisinage de son axe (A) de part et d'autre de celui-ci. Le premier guide de lumière (1) comporte un doigt (30) qui est aménagé par emboîtement dans un premier logement ménagé entre le corps (23) du bouton de commande et le couvercle (29). Le deuxième guide élémentaire de lumière (12) comporte un doigt de maintien (32) reçu par emboîtement dans un deuxième logement que comporte l'anneau (27).

Sur la variante de réalisation illustrée, le deuxième guide élémentaire de lumière (12) constitue avec un premier index (3) de même que le premier guide de lumière (1) qui constitue aussi un ensemble monobloc avec un deuxième index (3).

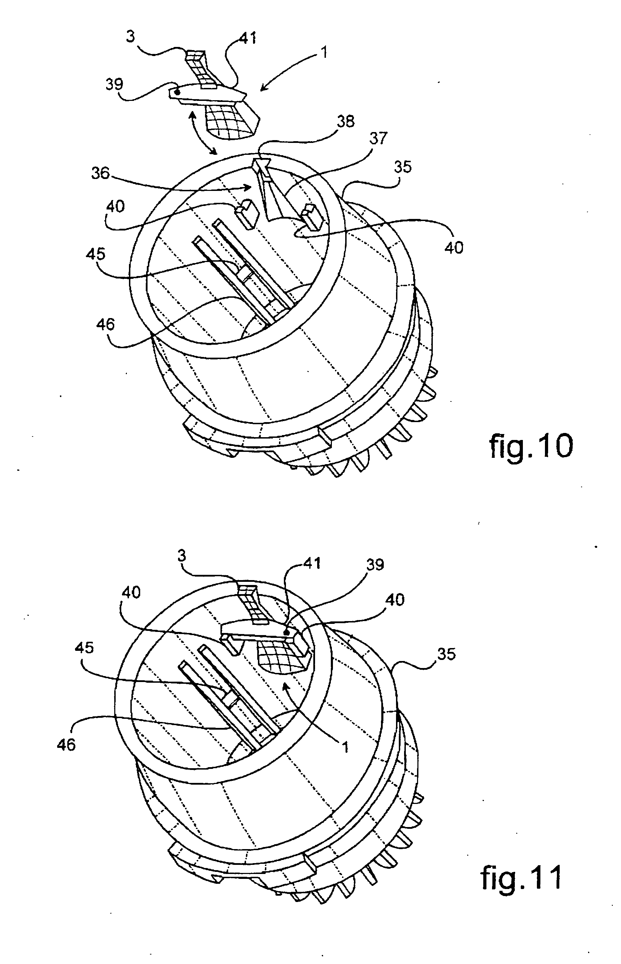

Sur les fig.10 à fig.12, un guide de lumière (1) est rapporté par emboîtement sur un corps rotatif évidé (35) que comporte le bouton de commande. Ce corps (35) est destiné à être monté tournant sur un support d'un tableau de commande, non représenté. Plus particulièrement, le guide de lumière est immobilisé radialement et est lié en rotation avec le corps (35) par l'intermédiaire d'une liaison par emboîtement entre le guide de lumière (1) et le corps (35). L'apport par emboîtement du guide de lumière (1) sur le corps (35) permet de réaliser distinctement l'un et l'autre de ces éléments. En outre, le corps (35) est apte à recevoir des guides de lumière (1) dont les faces de réflexion sont organisées suivant des conformations spécifiques, seules les faces des guides de lumière (1) agencées pour leur coopération par emboîtement avec le corps (35) étant susceptibles d'être identiques d'un guide de lumière à un autre.

Sur les fig.10 et fig.11, la liaison par emboîtement entre le guide de lumière (1) et le corps (35) est réalisée au moyen d'une rainure (36) ménagée sur le corps (35), pour la réception du guide de lumière (1). Cette rainure (36) comporte une première zone (37) pour la réception principale du guide de lumière (1), et une deuxième zone (38) pour la réception de l'extrémité de celui-ci, qui constitue l'index lumineux (3). Ces première et deuxième zones (37,38) de la rainure (36) sont axialement inclinées par rapport à la face interne du corps (35) en étant orientées en dièdre l'une par rapport à l'autre.

Le guide de lumière (1) est pourvu d'une platine (39) de soutien axial à l'intérieur du corps (35). Cette platine (39) est destinée à reposer sur des organes de soutien (40) que comporte le corps (35), pour le positionnement axial du guide de lumière (1). Ces organes de soutien (40) sont notamment constitués de pattes agencées en crochet pour la retenue de la platine (40). Cette dernière comporte une face convexe (41) destinée à épouser la forme concave de la face interne du corps (35).

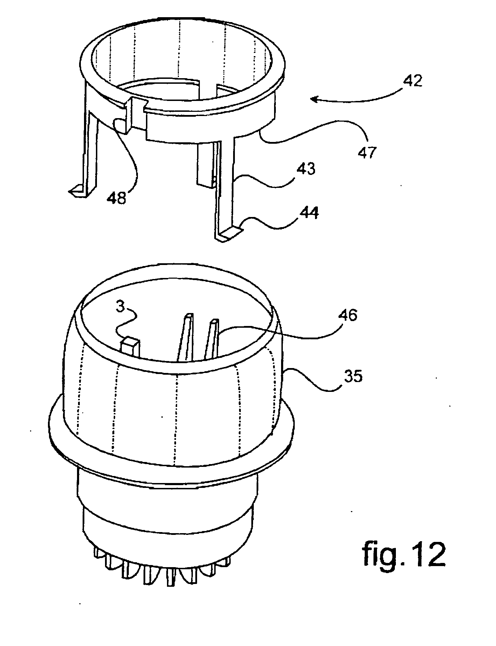

En se reportant par ailleurs sur la fig.12, Le bouton de commande comporte en outre un anneau chromé décoratif (42). Cet anneau (42) est rapporté sur le corps par encliquetage, au moyen de pattes (43) dont les extrémités libres sont agencées en crochet (44). Ces crochets (44) sont destinés à coopérer par emboîtement avec des logements complémentaires (45) ménagés sur le corps (35). Les pattes (43) sont radialement réparties à la périphérie de l'anneau, et sont organisées en détrompeur. Par exemple, les pattes (43) étant au nombre de trois, l'une des pattes (43) est plus large que les autres. Ces pattes sont reçues à l'intérieur de glissières (46) de positionnement radial que comporte le corps (35).

L'anneau (42) est avantageusement mis à profit pour un blocage axial du guide de lumière (1) à l'intérieur du corps (35). La face d'extrémité correspondante (47) de l'anneau (42) est destinée à prendre appui contre la platine (39), pour plaquer cette dernière contre les pattes de soutien (40). L'anneau comporte à sa périphérie une échancrure (48) pour le passage de l'extrémité correspondante du guide lumière (1) qui constitue l'index lumineux (3).

## Revendications

1. Guide de lumière (1) pour bouton de commande, notamment d'un tableau de bord d'un véhicule, interposé entre une source lumineuse (2) et un index (3) mobile en rotation autour d'un axe (A), comportant au moins une face de réception (4) des rayons lumineux émis par la source lumineuse (2), une première face de sortie (6) de rayons lumineux vers l'index (3), des premiers moyens optiques (4,8,15,16) pour orienter les rayons lumineux reçus sensiblement parallèlement à l'axe (A) de l'index (3) **caractérisé en ce qu'**il comporte des deuxièmes moyens optiques (5,22,14,17,18,19,20) pour focaliser les rayons lumineux vers au moins la première face de sortie (6).

2. Guide de lumière selon la revendication 1, **caractérisé en ce que** les premiers moyens optiques (4,8,15,16) comprennent la face de réception (4,15,16) du guide de lumière (1).

3. Guide de lumière selon la revendication 2, **caractérisé en ce que** la face de réception (4,15,16) est agencée en une surface plane.

4. Guide de lumière selon la revendication 2, **caractérisé en ce que** la face de réception (4,15,16) est agencée en une lentille sphérique dont le point focal est la source lumineuse (2) et dont l'axe optique est l'axe de rotation (A) de l'index (3).

5. Guide de lumière selon la revendication 2, **caractérisé en ce que** la face de réception (4,15,16) est agencée en une lentille de surface asphérique.

6. Guide de lumière selon la revendication 2, **caractérisé en ce que** la face de réception (4,15,16) est agencée en une lentille de surface polynomiale.

7. Guide de lumière selon l'une des revendications 2 à 6, **caractérisé en ce que** les premiers moyens optiques (4,8,15,16) comprennent en outre une face-miroir (8) ménagée dans le guide de lumière (1).

8. Guide de lumière selon la revendication 7, **caractérisé en ce que** la face-miroir (8) est agencée selon une parabole dont le foyer est la source lumineuse (2).

9. Guide de lumière selon la revendication 7, **caractérisé en ce que** la face-miroir (8) est agencée selon la surface d'un cône d'axe parallèle à l'axe (A) de l'index (3).

10. Guide de lumière selon la revendication 7, **caractérisé en ce que** la face-miroir (8) est une parabole dont le point focal est l'image de la source lumineuse (2) obtenue par l'intermédiaire de la face de réception (4).

11. Guide de lumière selon l'une des revendications précédentes, **caractérisé en ce que** les deuxièmes moyens optiques (5,22,14,17,18,19,20) comprennent au moins les faces latérales (5) du guide de lumière (1).

12. Guide de lumière selon la revendication 11, **caractérisé en ce que** chacune des faces latérales (5) est une parabole dont le foyer est situé à l'aplomb de la première face de sortie (6).

13. Guide de lumière selon l'une des revendications 11 et 12, **caractérisé en ce que** les deuxièmes moyens optiques (5,22,14,17,18,19,20) comprennent en outre des faces supplémentaires planes (22) qui sont interposées entre les faces latérales (5) et la première face de sortie (6).

14. Guide de lumière selon l'une des revendications 11 à 13, **caractérisé en ce que** les deuxièmes moyens optiques (5,22,14,17,18,19,20) comprennent en outre une deuxième face de sortie (14) ménagée dans le guide de lumière (1) en regard de la face de réception (4) pour focaliser les rayons lumineux reçus par la deuxième face de sortie (14) vers un symbole (13) équipant le bouton.

15. Guide de lumière selon l'une des revendications précédentes, **caractérisé en ce que** le guide de lumière (1) est constitué d'un premier guide élémentaire de lumière (11) comportant les premiers moyens optiques (4,8,15,16) et un deuxième guide élémentaire de lumière (12) comportant au moins partiellement les deuxièmes moyens optiques (5,22,14,17,18,19,20).

16. Guide de lumière selon la revendication 15, **caractérisé en ce que** les deuxièmes moyens optiques (5,22,14,17,18,19,20) comprennent en outre :
- une première face intermédiaire (17) ménagée dans le premier guide élémentaire (11) en regard de la face de réception (4),
- une face latérale (18) ménagée dans le premier guide élémentaire de lumière (11) en regard de la première face intermédiaire (17),
- une face d'entrée (19) ménagée dans le deuxième guide élémentaire de lumière (12) en regard de la face latérale (18) et,
- une deuxième face intermédiaire (20) ménagée dans le deuxième guide élémentaire de lumière (12) en regard de la face d'entrée (19).

17. Guide de lumière selon la revendication 16, **caractérisé en ce que** la première face intermédiaire (17) est une parabole dont le foyer est un point du deuxième guide élémentaire de lumière (12).

18. Guide de lumière selon la revendication 16, **caractérisé en ce que** la première face intermédiaire (17) est un cône d'axe parallèle à l'axe (A) de l'index (3).

19. Guide de lumière selon l'une des revendications 16 à 18, **caractérisé en ce que** la deuxième face intermédiaire (20) est une parabole dont le foyer est située en un point de la face latérale (18).

20. Guide de lumière selon l'une des revendications 16 à 18, **caractérisé en ce que** la deuxième face intermédiaire (20) est agencée selon la surface d'un cône d'axe parallèle à l'axe (A) de l'index (3).

21. Guide de lumière selon l'une des revendications 16 à 20, **caractérisé en ce que** la face d'entrée (19) est agencée selon une portion d'un cylindre d'axe parallèle à l'axe (A) de l'index (3).

22. Guide de lumière selon l'une des revendications 16 à 20, **caractérisé en ce que** la face d'entrée (19) est agencée selon une portion d'une lentille sphérique.

23. Guide de lumière selon l'une des revendications 16 à 20, **caractérisé en ce que** la face d'entrée (19) est agencée selon une portion d'une lentille torique.

24. Guide de lumière selon l'une des revendications précédentes, **caractérisé en ce qu**'il comprend au moins une face latérale (5) recouverte d'un revêtement réfléchissant (9).

25. Guide de lumière selon l'une des revendications précédentes, **caractérisé en ce que** la face de sortie (6,14) est dépolie pour diffuser les rayons lumineux qu'elle reçoit.

26. Guide de lumière selon l'une des revendications précédentes, **caractérisé en ce que** la face de sortie (6,14) est recouverte d'une matière diffusante (10) surmoulée pour diffuser les rayons lumineux qu'elle reçoit.

27. Bouton de commande équipé d'au moins un guide de lumière selon l'une quelconque des revendications précédentes.

28. Bouton de commande selon la revendication 27, **caractérisé en ce qu**'il comprend un corps de bouton (23) mobile en translation le long de son axe de symétrie (A) et un index (3) mobile en rotation autour de cet axe de symétrie (A).

29. Bouton de commande selon la revendication 27, **caractérisé en ce qu**'il comporte un corps rotatif (35) axialement évidé équipé de moyens de réception par emboîtement du guide de lumière (1).

30. Bouton de commande selon la revendication 29, **caractérisé en ce que** les moyens de réception comprennent une rainure (36) ménagée dans la face interne du corps (35), et des moyens de soutien' axial pour la réception du guide de lumière (1).

31. Bouton de commande selon la revendication 30, **caractérisé en ce que** les moyens de soutien axial associent une platine (39) ménagée sur le guide de lumière (1) et des pattes de soutien (40) de cette platine (39) ménagées sur le corps (35).

32. Bouton de commande selon l'une des revendications 30 et 31, **caractérisé en ce que** les moyens de réception comprennent des moyens de blocage du guide de lumière (1) en appui axial contre les organes de soutien (40).

33. Bouton de commande selon la revendication 32, **caractérisé en ce que** les moyens de blocage sont constitués par un anneau décoratif (42) coiffant le bord du débouché du corps (35).

34. Bouton de commande selon la revendication 33, **caractérisé en ce que** l'anneau décoratif (42) comporte une échancrure (48) pour le passage de l'extrémité correspondante du guide lumière (1), qui constitue l'index lumineux (3).

35. Bouton de commande selon l'une des revendications 33 et 34, **caractérisé en ce que** l'anneau décoratif (42) est rapporté par encliquetage sur le corps (35).

## Claims

1. A light guide (1) for a control button, in particular of an instrument panel of a vehicle, inserted between a light source (2) and a mobile index (3) rotating about an axis (A), comprising at least one face (4) receiving light rays emitted by the light source (2), a first output face (6) discharging light rays to the index (3) and first optical means (4, 8, 15, 16) for orientating the light rays received essentially parallel with the axis (A) of the index (3), **characterised in that** it comprises second optical means (5, 22, 14, 17, 18, 19, 20) for focussing the light rays towards at least the first output face (6).

2. The light guide according to Claim 1, **characterised in that** the first optical means (4, 8, 15, 16) comprise the face (4, 15, 16) for receiving the light guide (1).

3. The light guide according to Claim 2, **characterised in that** the receiving face (4, 15, 16) is arranged on a flat surface.

4. The light guide according to Claim 2, **characterised in that** the receiving face (4, 15, 16) is arranged in a spherical lens whose focal point is the light source (2) and whose optical axis is the axis of rotation (A) of the index (3).

5. The light guide according to Claim 2, **characterised in that** the receiving face (4, 15, 16) is arranged in a lens with an aspherical surface.

6. The light guide according to Claim 2, **characterised in that** the receiving face (4, 15, 16) is arranged in a lens with a polynomial surface.

7. The light guide according to one of Claims 2 to 6, **characterised in that** the first optical means (4, 8, 15, 16) also comprise a mirror face (8) arranged in the light guide (1).

8. The light guide according to Claim 7, **characterised in that** the mirror face (8) is arranged along a parabola whose focus is the light source (2).

9. The light guide according to Claim 7, **characterised in that** the mirror face (8) is arranged along the surface of a cone with an axis parallel to the axis (A) of the index (3).

10. The light guide according to Claim 7, **characterised in that** the mirror face (8) is a parabola whose focal point is the image of the light source (2) obtained by means of the receiving face (4).

11. The light guide according to one of the preceding claims, **characterised in that** the second optical means (5, 22, 14, 17, 18, 19, 20) comprise at least the lateral faces (5) of the light guide (1).

12. The light guide according to Claim 11, **characterised in that** each of the lateral faces (5) is a parabola whose focus is located flush with the first output face (6).

13. The light guide according to one of Claims 11 and 12, **characterised in that** the second optical means (5, 22, 14, 17, 18, 19, 20) also comprise additional flat faces (22), which are inserted between the lateral faces (5) and the first output face (6).

14. The light guide according to one of Claims 11 to 13, **characterised in that** the second optical means (5, 22, 14, 17, 18, 19, 20) also comprise a second output face (14) arranged in the light guide (1) opposite the receiving face (4) in order to focus the light rays received by the second output face (14) towards a symbol (13) provided on the button.

15. The light guide according to one of the preceding claims, **characterised in that** the light guide (1) consists of a first elementary light guide (11) comprising the first optical means (4, 8, 15, 16) and a second elementary light guide (12) comprising at least partially the second optical means (5, 22, 14, 17, 18, 19, 20).

16. The light guide according to Claim 15, **characterised in that** the second optical means (5, 22, 14, 17, 18, 19, 20) also comprise:
- a first intermediate face (17) arranged in the first elementary guide (11) opposite the receiving face (4),
- a lateral face (18) arranged in the first elementary light guide (11) opposite the first intermediate face (17),
- an input face (19) arranged in the second elementary light guide (12) opposite the lateral face (18) and
- a second intermediate face (20) arranged in the second elementary light guide (12) opposite the input face (19).

17. The light guide according to Claim 16, **characterised in that** the first intermediate face (17) is a parabola whose focus is a point on the second elementary light guide (12).

18. The light guide according to Claim 16, **characterised in that** the first intermediate face (17) is a cone with an axis parallel to the axis (A) of the index (3).

19. The light guide according to one of Claims 16 to 18, **characterised in that** the second intermediate face (20) is a parabola whose focus is located at a point on the lateral face (18).

20. The light guide according to Claims 16 to 18, **characterised in that** the second intermediate face (20) is arranged along the surface of a cone with an axis parallel to the axis (A) of the index (3).

21. The light guide according to one of Claims 16 to 20, **characterised in that** the input face (19) is arranged along a portion of a cylinder with an axis parallel to the axis (A) of the index (3).

22. The light guide according to one of Claims 16 to 20, **characterised in that** the input face (19) is arranged along a portion of a spherical lens.

23. The light guide according to one of Claims 16 to 20, **characterised in that** the input face (19) is arranged along a portion of a toroidal lens.

24. The light guide according to one of the preceding claims, **characterised in that** it comprises at least one lateral face (5) covered with a reflecting coating (9).

25. The light guide according to one of the preceding claims, **characterised in that** the output face (6, 14) is depolarised to diffuse the light rays it receives.

26. The light guide according to one of the preceding claims, **characterised in that** the output face (6, 14) is covered with a diffusing material (10) moulded from a casting for diffusing the light rays it receives.

27. A control button equipped with at least one light guide according to any of the preceding claims.

28. The control button according to Claim 27, **characterised in that** it comprises a button body (23) that moves in translation along its axis of symmetry (A) and an index (3) moving in rotation about this axis of symmetry (A).

29. The control button according to Claim 27, **characterised in that** it comprises an axially hollowed out rotary body (35) equipped with means of receiving the light guide (1) by interlocking.

30. The control button according to Claim 29, **characterised in that** the receiving means comprise a groove (36) arranged in the inner face of the body (35) and means of axial support for receiving the light guide (1).

31. The control button according to Claim 30, **characterised in that** the means of axial support combine a plate (39) arranged on the light guide (1) and the supporting legs (40) of this plate (39) arranged on the body (35).

32. The control button according to one of Claims 30 and 31, **characterised in that** the receiving means comprise means of blocking the light guide (1) in axial support against the support mechanisms (40).

33. The control button according to Claim 32, **characterised in that** the blocking means consist of a decorative ring (42) projecting from the edge of the opening of the body (3 5).

34. The control button according to Claim 33, **characterised in that** decorative ring (42) comprises an indentation (48) for passing through the corresponding end of the light guide (1), which constitutes the light index (3).

35. The control button according to one of Claims 33 and 34, **characterised in that** the decorative ring (42) is supported by clamp-mounting on the body (35).

## Patentansprüche

1. Lichtleiter (1) für Steuerknöpfe, insbesondere des Armaturenbretts eines Fahrzeugs, der sich zwischen einer Lichtquelle (2) und einem um eine Achse (A) drehbaren Zeiger befindet, umfassend mindestens eine Empfangsfläche (4) der von der Lichtquelle (2) ausgesandten Lichtstrahlen, eine erste Austrittsfläche (6) der Lichtstrahlen zum Zeiger (3), und erste optische Mittel (4, 8, 15, 16) zur Orientierung der etwa parallel zur Achse (A) des Zeigers (3) empfangenen Lichtstrahlen, **dadurch gekennzeichnet, daß** er zweite optische Mittel zur Fokussierung der Lichtstrahlen in Richtung der mindestens ersten Austrittsfläche (6) umfasst

2. Lichtleiter nach Anspruch 1, **dadurch gekennzeichnet, daß** die ersten optischen Mittel (4, 8, 15, 16) die Empfangsfläche (4, 15, 16) des Lichtleiters (1) umfassen.

3. Lichtleiter nach Anspruch 2, **dadurch gekennzeichnet, daß** die Empfangsfläche (4, 15, 16) als ebene Fläche ausgeführt ist.

4. Lichtleiter nach Anspruch 2, **dadurch gekennzeichnet, daß** die Empfangsfläche (4, 15, 16) als sphärische Linse ausgeführt ist, deren Brennpunkt die Lichtquelle (2), und deren optische Achse die Rotationsachse (A) des Zeigers (3) ist.

5. Lichtleiter nach Anspruch 2, **dadurch gekennzeichnet, daß** die Empfangsfläche (4, 15, 16) als nichtsphärische Linse ausgeführt ist.

6. Lichtleiter nach Anspruch 2, **dadurch gekennzeichnet, daß** die Empfangsfläche (4, 15, 16) als polynomialflächige Linse ausgeführt ist.

7. Lichtleiter nach einem der Ansprüche 2 bis 6, **dadurch gekennzeichnet, daß** die ersten optischen Mittel (4, 8, 15, 16) auch noch eine Spiegelfläche (8) umfassen, die in dem Lichtleiter (1) ausgeführt ist.

8. Lichtleiter nach Anspruch 7, **dadurch gekennzeichnet, daß** die Spiegelfläche (8) als Parabolspiegel ausgeführt ist, dessen Brennpunkt die Lichtquelle (2) ist.

9. Lichtleiter nach Anspruch 7, **dadurch gekennzeichnet, daß** die Spiegelfläche (8) als Kegel ausgeführt ist, dessen Achse parallel zur Achse (A) des Zeigers (3) verläuft.

10. Lichtleiter nach Anspruch 7, **dadurch gekennzeichnet, daß** die Spiegelfläche (8) als Parabolspiegel ausgeführt ist, dessen Brennpunkt das durch die Eingangsfläche (4) erhaltene Bild der Lichtquelle (2) ist.

11. Lichtleiter nach einem der vorigen Ansprüche, **dadurch gekennzeichnet, daß** die zweiten optischen Mittel (5, 22, 14, 17, 18, 19, 20) mindestens die Seitenflächen (5) des Lichtleiters (1) umfassen.

12. Lichtleiter nach einem der Ansprüche 11 und 12, **dadurch gekennzeichnet, daß** jede einzelne der Seitenflächen (5) eine Parabolfläche ist, deren Brennpunkt sich senkrecht zur ersten Austrittsfläche (6) befindet.

13. Lichtleiter nach einem der Ansprüche 11 und 12, **dadurch gekennzeichnet, daß** die zweiten optischen Mittel (5, 22, 14, 17, 18, 19, 20) zusätzliche ebene Flächen (22) umfassen, die sich zwischen den Seitenflächen (5) und der ersten Austrittsfläche (6) befinden.

14. Lichtleiter nach einem der Ansprüche 11 bis 13, **dadurch gekennzeichnet, daß** die zweiten optischen Mittel (5, 22, 14, 17, 18, 19, 20) auch noch eine zweite, in den Lichtleiter (1), gegenüber der Empfangsfläche (4) angebrachte zweite Austrittsfläche (14) zur Fokussierung der durch die zweite Austrittsfläche (14) empfangenen Lichtstrahlen in Richtung eines den Knopf ausstattenden Symbols (13) aufweisen.

15. Lichtleiter nach einem der vorigen Ansprüche, **dadurch gekennzeichnet, daß** der Lichtleiter (1) aus einem ersten elementaren, die ersten optischen Mittel (4, 8, 15, 16) umfassenden Lichtleiter (11) und einem zweiten elementaren, mindestens teilweise die zweiten optischen Mittel (5, 22, 14, 17, 18, 19, 20) umfassenden Lichtleiter (12), besteht.

16. Lichtleiter nach Anspruch 15, **dadurch gekennzeichnet, daß** die zweiten optischen Mittel (5, 22, 14, 17, 18, 19, 20) auch noch umfassen :
- eine erste Zwischenfläche (17), die in dem ersten elementaren Lichtleiter (11) gegenüber der Empfangsfläche (4) angebracht ist,
- eine Seitenfläche (18), die in dem ersten elementaren Lichtleiter (11) gegenüber der ersten Zwischenfläche (17) angebracht ist,
- eine Eintrittsfläche (19), die in dem zweiten elementaren Lichtleiter (12) gegenüber der Seitenfläche (18) angebracht ist und,
- eine zweite Zwischenfläche (20), die in dem zweiten elementaren Lichtleiter (12) gegenüber der Eintrittsfläche (19) angebracht ist.

17. Lichtleiter nach Anspruch 16, **dadurch gekennzeichnet, daß** die erste Zwischenfläche (17) eine Parabolfläche ist, deren Brennpunkt ein Punkt des zweiten elementaren Lichtleiters (12) ist.

18. Lichtleiter nach Anspruch 16, **dadurch gekennzeichnet, daß** die erste Zwischenfläche (17) ein Kegel ist, dessen Achse parallel zur Achse (A) des Zeigers (3) verläuft.

19. Lichtleiter nach einem der Ansprüche 16 bis 18, **dadurch gekennzeichnet, daß** die zweite Zwischenfläche (20) eine Parabolfläche ist, deren Brennpunkt sich an einen Punkt der Seitenfläche (18) befindet.

20. Lichtleiter nach einem der Ansprüche 16 bis 18, **dadurch gekennzeichnet, daß** die zweite Zwischenfläche (20) als Oberfläche eines Kegels angepasst ist, dessen Achse parallel zur Achse (A) des Zeigers (3) verläuft.

21. Lichtleiter nach einem der Ansprüche 16 bis 20, **dadurch gekennzeichnet, daß** die Eintrittsfläche (19) als Oberfläche eines Zylinders ausgeführt ist, dessen Achse parallel zur Achse (A) des Zeigers (3) verläuft.

22. Lichtleiter nach einem der Ansprüche 16 bis 20, **dadurch gekennzeichnet, daß** die Eintrittsfläche (19) als Teil einer sphärischen Linse ausgeführt ist.

23. Lichtleiter nach einem der Ansprüche 16 bis 20, **dadurch gekennzeichnet, daß** die Eintrittsfläche (19) als Teil einer torischen Linse ausgeführt ist.

24. Lichtleiter nach einem der vorigen Ansprüche, **dadurch gekennzeichnet, daß** er wenigstens eine mit einer reflektierenden Schicht (9) überzogene Seitenfläche (5) umfasst.

25. Lichtleiter nach einem der vorigen Ansprüche, **dadurch gekennzeichnet, daß** die Austrittsfläche (6, 14) zur Streuung der empfangenen Lichtstrahlen matt geschliffen wurde.

26. Lichtleiter nach einem der vorigen Ansprüche, **dadurch gekennzeichnet, daß** die Austrittsfläche (6, 14) zur Streuung der empfangenen Lichtstrahlen mit einer lichtstreuenden Schicht (10) überspritzt wurde.

27. Steuerungsknopf der mit einem Lichtleiter nach wenigstens einem der vorigen Ansprüche ausgestattet ist.

28. Steuerungsknopf nach Anspruch 27, **dadurch gekennzeichnet, daß** er einen sich seiner Symmetrieachse (A) entlang, translationsbeweglichen Knopfkörper (23) und einen sich um diese Symmetrieachse (A) drehbaren Zeiger (3) umfasst.

29. Steuerungsknopf nach Anspruch 27, **dadurch gekennzeichnet, daß** er einen axial ausgehöhlten, drehbaren Körper (35) aufweist, der mit Mitteln zur Aufnahme durch Einfügen des Lichtleiters (1) ausgestattet ist.

30. Steuerungsknopf nach Anspruch 29, **dadurch gekennzeichnet, daß** die Mittel zur Aufnahme eine auf der inneren Fläche des Körpers (35) angebrachte Rille (36) und axiale Halterungsmittel zur Aufnahme des Lichtleiters (1) umfassen.

31. Steuerungsknopf nach Anspruch 30, **dadurch gekennzeichnet, daß** die axialen Halterungsmittel ein auf den Lichtleiter angebrachtes Plättchen (39) und auf den Körper (35) angebrachte Halterungslappen (40) verbinden.

32. Steuerungsknopf nach einem der Ansprüche 30 und 31, **dadurch gekennzeichnet, daß** die Halterungsmittel Blockierungsmittel des sich gegen die Halterungsorgane (40) axial stützenden Lichtleiters (1) umfassen.

33. Steuerungsknopf nach Anspruch 32, **dadurch gekennzeichnet, daß** die Blockierungsmittel aus einem Verzierungsring (42) bestehen, der den Mündungsrand des Körpers (35) bedeckt.

34. Steuerungsknopf nach Anspruch 33, **dadurch gekennzeichnet, daß** der Verzierungsring (42) eine Ausnehmung (48) aufweist, die zum Durchlassen des entsprechenden Endes des Lichtleiters (1) vorgesehen ist, die den leuchtenden Zeiger (3) bildet.

35. Steuerungsknopf nach einem der Ansprüche 33 und 34, **dadurch gekennzeichnet, daß** der Verzierungsring (42) durch Einrasten an den Körper (35) angebracht wird.
